Europäisches Patentamt

European Patent Office

Office européen des brevets

(19)

(11) Numéro de publication: **0 064 956**
**A2**

# (12) DEMANDE DE BREVET EUROPEEN

(21) Numéro de dépôt: 82830092.1

(22) Date de dépôt: 14.04.82

(51) Int. Cl.³: **F 16 H 39/32**
**F 16 H 39/40, F 16 D 31/06**

(30) Priorité: 05.05.81 IT 2150581

(43) Date de publication de la demande:
**17.11.82 Bulletin 82/46**

(84) Etats contractants désignés:
**CH DE FR GB LI**

(71) Demandeur: **Vismara, Angelo**
**Via Roberto Vitali 5**
**I-22066 Mariano Comense (CO)(IT)**

(72) Inventeur: **Vismara, Angelo**
**Via Roberto Vitali 5**
**I-22066 Mariano Comense (CO)(IT)**

(54) **Variateur hydraulique de vitesse avec fonctions d'embrayage, de modification des rapports de transmission avec marche et renversement de marche de différentiel et de frein.**

(57) Le variateur est composé d'une chambre étanche pleine de fluide de travail divisée en deux compartiments (11, 12), d'un diaphragme (7) avec deux conduits linéaires (P.1 P.2) et quatre coisés (13, 14, 15, 16), de deux soupapes (8) qui ouvrent, ferment et invertissent le flux du fluide, d'une cloison (17) de réglage de la pression du fluide; cette cloison est actionnée par un levier avec régulateur à masses centrifuges reliées à l'arbre moteur.

Dans le compartiment inférieur (11) est disposé un arbre moteur (A.M.) avec rotor mobile motrice (4); dans le compartiment supérieur (12) deux rotors mobiles conduites (5, 6), avec arbres de sortie (A.1, A.2) disposés coaxialement et indépendament l'un de l'autre.

Le variateur permet le réglage automatique de la vitesse des véhicules à moteur.

./...

EP 0 064 956 A2

Fig. 2

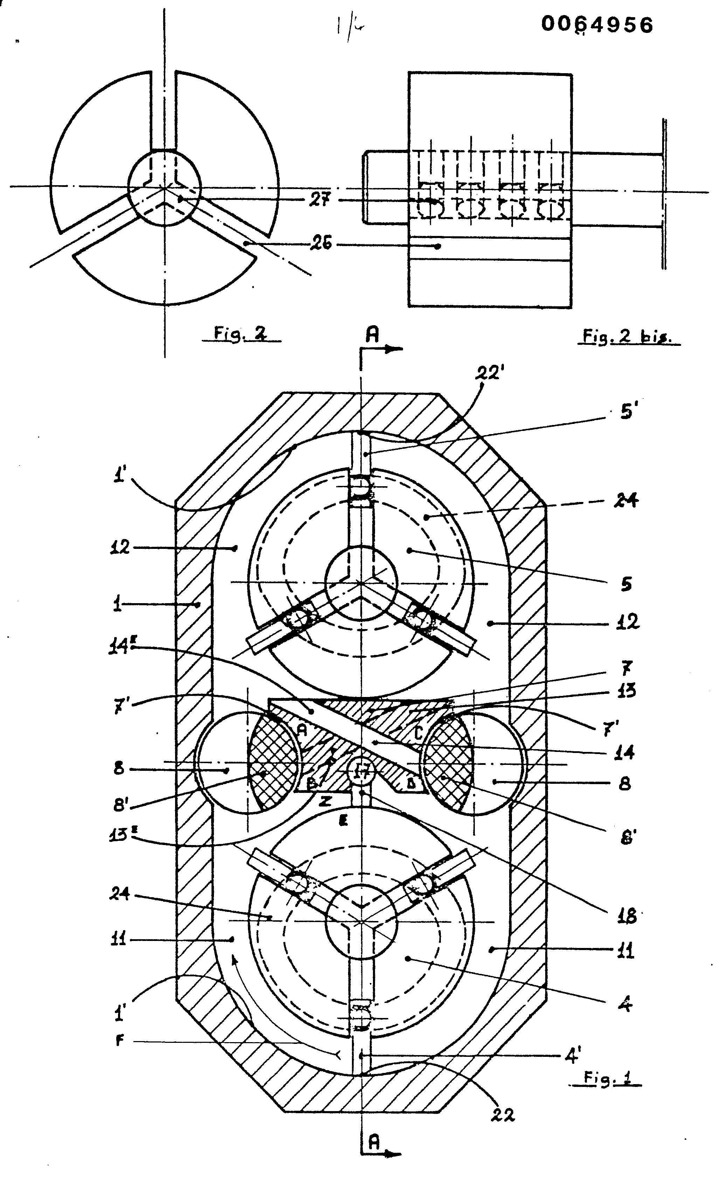

Fig. 2 bis.

Fig. 1

Fig. 3

Sez. A-A

1

VARIATEUR HYDRAULIQUE DE VITESSE AVEC FONCTIONS D'EM-
BRAYAGE, DE MODIFICATION DES RAPPORTS DE TRANSMISSION
AVEC MARCHE ET RENVERSEMENT DE MARCHE DE DIFFERENTIEL
ET DE FREIN.

L'invention concerne un variateur hydraulique de vitesse avec fonctions d'embrayage, de modification des
rapports de transmission avec marche et renversement
de marche, de différentiel et de frein. Toutes ces
fonctions sont réunies dans un dispositif unique compact
apte à remplacer dans les véhicules à moteur la transmis
sion composée de l'embrayage à disque, du changement
de vitesses à engrenages et du différentiel et fait
fonction de frein.

On connaît l'emploi dans les véhicules à moteur d'un
changement mécanique de vitesses à engrenages avec
différents rapports de réduction et avec l'embrayage
qui sert de jonction progressive entre le moteur et le
changement de vitesse et le différentiel qui répartit
le couple entre les roues, avec ce système on a besoin
d'agir sur l'embrayage, de sélectionner les vitesses
et d'avoir une série limitée de rapports.

Il existe des transmissions automatiques indiquées pour

2

des véhicules à moteur dont les plus en usage est la "Hydromatich", avec convertisseur de couple hydraulique; cette solution est indiquée pour des véhicules à grosse puissance.

La transmission "variomatich" à courroies avec poulies à diamètre variable est indiquée pour les véhicules de petite et moyenne puissance. D'autres transmissions automatiques sont peu répandues parce que'elles sont complexes.

Dans toutes les transmissions automatiques adoptées,le rendement est faible.

La présente invention a le but de remedter à ces incon vénients. L'invention telle qu elle est caractérisée dans les revendications, résoud le problème en créant un dispositif qui effectue les variations de vitesses avec un système d'embrayage hydraulique continu avec marche avant et renversement de marche fait fonction de différentiel et de frein.

L'ensemble est composé d'une chambre étanche pleine de fluide de travail, divisée en deux compartiments par un diaphragme avec conduits linéaires et croisés pour le passage du fluide; de deux soupapes pivotantes qui

3

ouvrent et ferment ces conduits; d'une cloison de réglage de l'intensité et de la pression du fluide. Dans le premier compartiment est placé l'arbre moteur avec rotor, avec les volets à actionnement contraint par des cames desmodromiques. Dans le second comparti ment se trouvent, séparés l'un de l'autre, deux arbres conduits avec rotors à volets comme le rotor moteur. Les rotors conduts sont actionés par le flux de fluide qui est poussé par le rotor moteur.

Les arbres conduits peuvent exécuter une rotation égale ou bien invertie par rapport à l'arbre moteur, ou bien être déphasés comme différentiel et prendre aussi la position d'arrêt.

Les avantages obtenus grâce à cette invention consistent dans le regorupement en un corps unique de construction simple, de dimensions relativement réduites, de bas coût de production et entretien, qui fait fonction d'embrayage, de variation souple des rapports de vitesses, de différentiel et de frein.

Ce variateur est indiqué pour la transmission de petites, moyennes et grandes puissances.

Il a un rendement excellent.

4

L'invention est exposée ci-après plus en détail avec l'aide des dessins représentants un seul mode d'exécution.

La figure 1 est une section transversale du variateur.

La figure 2 et 2 Bis est une vue transversale et frontale d'un arbre avec rotor.

La figure 3 est une section longitudinale du variateur formé par une chambre étanche pleine de fluide de travail qui comprend un rotor moteur, une cloison de réglage du flux du fluide, par le diaphragme avec conduits et soupapes pivotantes et par deux rotors conduits.

La figure 4 est une élévation frontale schématique de la cloison de réglage du flux du fluide.

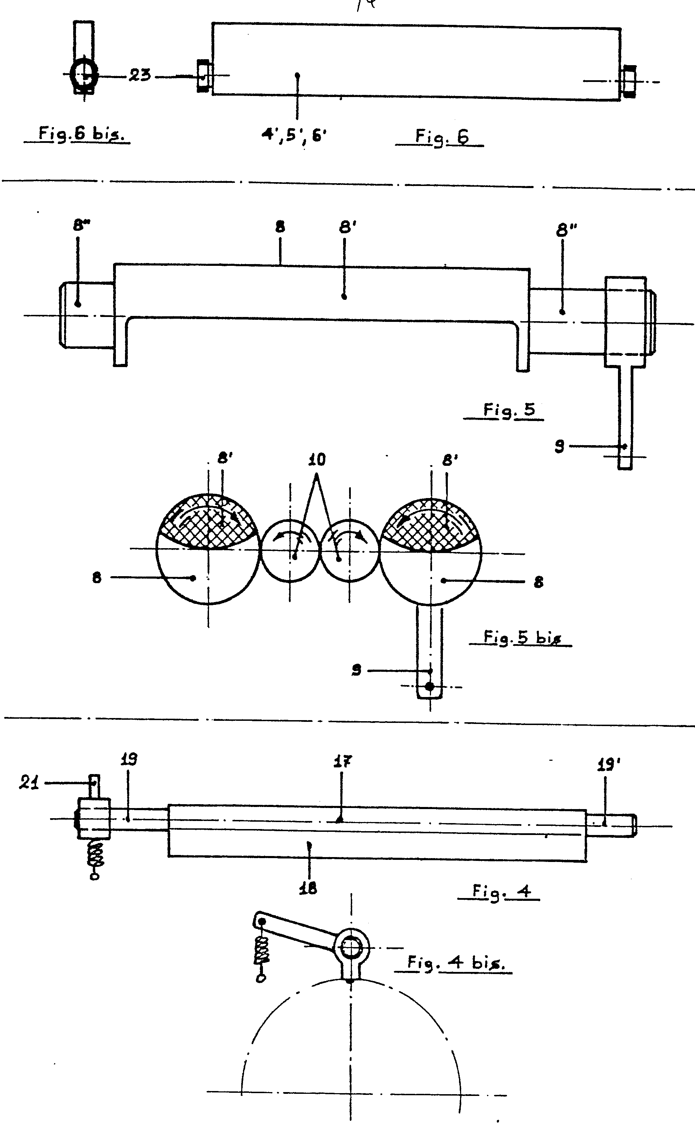

La figure 4 Bis rprésente de côté la figure 4

La figure 5 est une vue plane de la soupape pivotante de déviation du flux.

La figure 5 Bis montre schématiquement l'emploi réciproque des deux soupapes pivotantes avec l'interposition de rouages.

La figure 6 est une élévation frontale d'un volet de

5

rotor muni dans les têtes de goujons en guise de poussoir.

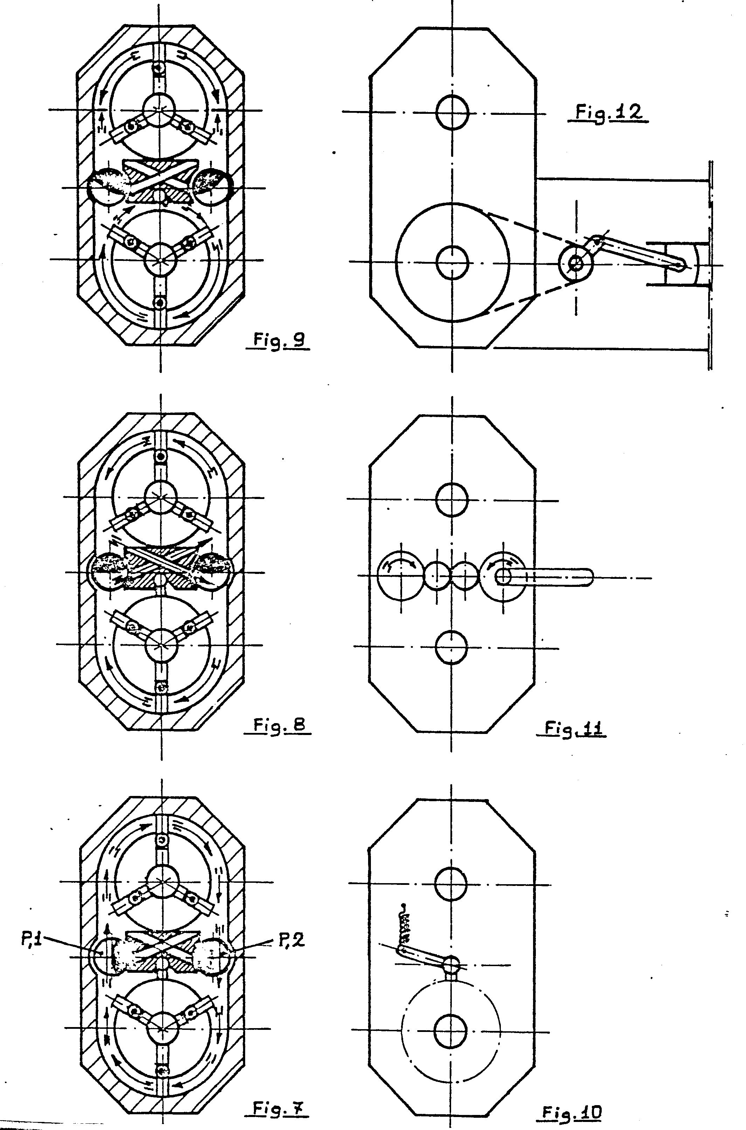

La figure 7 représente le variateur en section trans versale à échelle réduite dans laquelle les soupapes pivotantes sont tournées dans une position telle à permettre au flux actionné par le rotor moteur, un déplacement continu le long de la surface entière de la paroi interne de la partie à manchon.

La figure 8 correspond substantiellement à la figure 7 mais avec les soupapes pivotantes en position telle à imposer aux arbres conduits un mouvement de rotation inverti par rapport à celui de l'arbre moteur.

La figure 9 correspond substantiellement à la figure 7 mais avec les soupapes pivotantes en une position intermédiaire à celle prise dans la fig. 7 e la fig. 8 et donc d'arrêt des arbres conduits.

La figure 10 est la vue externe du convercle du variateur côté de commande de la cloison de réglage du flux du fluide.

La figure 11 est la vue externe du convercle sur le côté du levier et organes de commande des soupapes pivotantes.

6

*La figure 12* montre le variateur accouplé à travers un réducteur à un moteur à explosion.

En se référant aux figures et selon ladite forme préférée de réalisation, le variateur en objet est constitué d'un boîtier central en caisson 1 allongé à manchon et de deux couvercles 2,3 de fermeture latérale.

L'ensemble contient trois rotors 4,5,6 munis de volets 4',5',6' déplaçables radialement.

Un premier rotor 4 est actionné par un moteur, par exemple le moteur à combustion interne d'un véhicule automobile, alors que les rotors 5 et 6 conduits accouplés à un demi-axe dudit véhicule automobile et actionnées par un fluide de travail, mû par les volets de le premier rotor 4.

Les surfaces de la paroi interne 1' de la partie centrale 1, en correspondance des extrémités dudit manchon, sont conformées en demi-cylindre, avec axe disposé coaxialement à l'axe des rotors moteurs 4 et respectivement, à la série des deux rotors conduits 5,6. Ainsi on obtient que le dos des volets et desquels sont pourvus les rotors, adhèrent parfaitement, sur un arc

7

d'à peu près 130° contre les dites parois semi-cylin driques 1.

Les axes A.M., A.1, A.2 des rotors moteurs et conduits

sont espacés entre eux à une distance telle qui permet l'insertion entre les rotors moteurs et conduits d'une paroi intermédiaire 7 qui s'étend sur toute la longueur de la paroi 1 de la boîte.

Sur les côtés AB et CD de la paroi 7 on a obtenu une cavité 7, en guise de siège, pour un corps de soupape 8, pivotant angulairement autour de son propre axe.

L'axe longitudinal de cette dernière soupape 8, l'axe du siège 7' et les axes mobiles 4,5,6 sont disposés parallèlement entre eux.

En se référant aux figures 5,5 Bis, le corps de soupape pivotante 8 dans la section transversale 8' est conformée en secteur on bien en segment de cercle.

Les extrémités 8', qui sur les deux côtés sont en saillie vers l'extérieur, trouvent leur logement dans les couvercles 2,3 respectifs alors qu'une de ces extrémités est munie d'un levier d'actionnement 9.

En se référant aux figures 5 Bis-11, les soupapes pivotantes 8 son réciproquement engagées par l'interpo

8

sition d'une paire de roues dentées 10 qui collaborent avec leurs respectives dentures existentes à une extrémité des dites soupapes 8.

Selon l'orientation des sus-dits secteurs ou segments 8' de la soupape 8, ceux-ci, avec la paroi intermédiaire 7 existante dans la boîte 1, constituent un diaphragme de subdivision de  la boîte en un compartiment inférieur 11 et un supérieur 12. La paroi intermédiaire 7 est parcourue transversalement par des canaux 13, 14, 15, 16 pour le passage du fluide. Par rapport à un plan passant par l'axe des deux corps de soupape pivotante 8, les dits canaux 13,14,15,16 sont disposés inclinés avec direction alternée. Précisément, l'orientation de l'inclinaison est telle que l'ouverture inférieure 13E d'un premier canal 13 débouche dans le siège 7' du corps intermédiaire 7 pour communiquer avec le compartiment supérieur 12 alors que l'ouverture opposée 14E du canal communique avec le compartiment inférieur 11, l'orientation du deuxième canal 14 subséquent étant disposé avec un inclinaison inverse, soit croisée par rapport au premier canal et ainsi de suite pour les canaux 15, 16. De la figure 1 il apparaît comment la superficie

9

B.D. de la paroi intermédiaire 7 est espacée d'une distance "Z" de la ligne E de la surface supérieure du rotor moteur et cela pour réaliser une fissure d'ampleur réglable entre ledit rotor moteur 4 et ladite paroi intermédiaire 7, avec la tâche de régler la pres sion et le débit de refoulement du fluide aux rotors conduits.

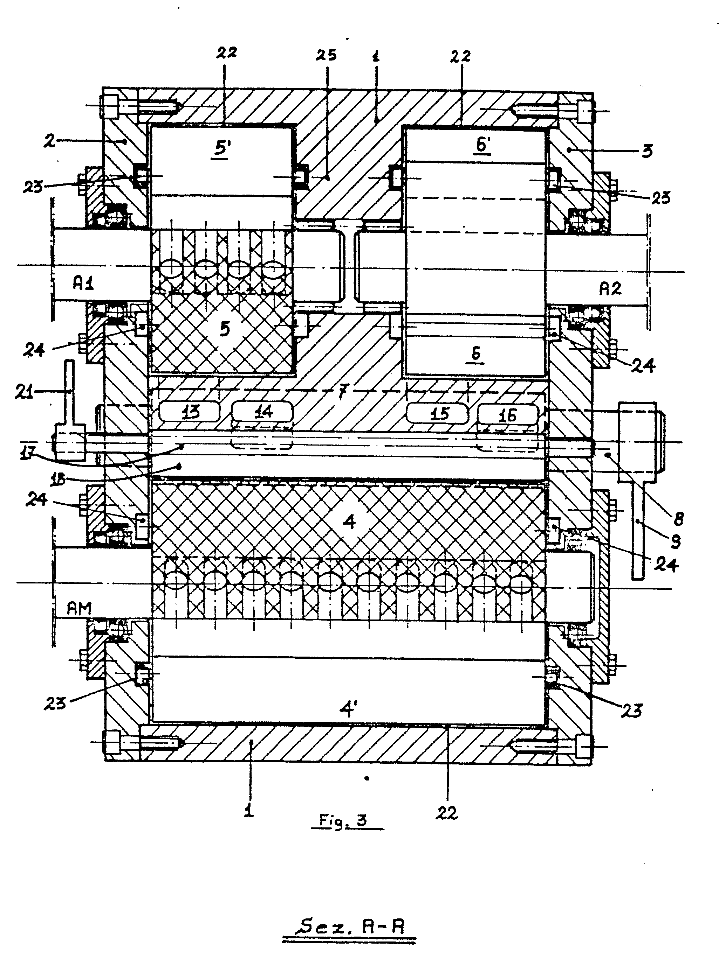

Le réglage de l'ampleur de ladite fissure, qui s'étend tout le long de la longueur de le rotor moteur 4, se produit par l'entremise d'une cloison 17 du type à charnière, dont la paroi 18 est orientable par rapport aux goujons cylindriques latéraux 19, 19' qui, à leur tour trouvent leur logement pivotant dans les couvercles 2,3 respectifs. L'ouverture ou la fermeture de la cloison, avec l'interposition d'un bras de levier, est actionnée par un régulateur centrifuge relié aux tours du moteur. La figure 3, montre comment le dos 22 des volets 4' de le rotor moteur vient à se trouver au fil de la sus-dite ligne supérieure E de la surface quand les volets eux- mêmes sont momentanément disposés perpendiculairement à la surface B.D. de la paroi intermédiaire 7. Le dos 22 des volets 5', 6' appartenant à la série des rotors conduits 5 et 6 quant elle se trouvent momentanément perpendiculaires à la surface A C de la paroi intermédiaire 7, résultera parfaitement au fil de la surface des rotors conduits.

Les volets 4', 5', 6' des rotors sont déplaçables radialement dans les fissures 26 obtenues dans ce but dans les rotors mêmes; ces fissures communiquent entre elles 27. Les volets sont en outre commandés dans leur déplacement raial par 23 goujons avec bagues de roulement, qui en guise de poussoir, sont coulissants dans les rainures ou cames desmodroniques 24 obtenues dans les couvercles 2,3 et dans une nervure 25 de la surface centrale supérieure de la boîte.

Fonctionnement du variateur.

Le moteur d'un véhicule est relié à travers un réducteur au variateur. Le moteur à bas nombre de tours actionne le rotor moteur (4) en provoquant un flux de fluide vers les rotors conduits.

La cloison de réglage du volume et de la pression du fluide aux rotors conduites est tout à fait ouverte et le fluide passe en court circuit de la partie refoulante à la partie aspirante de le rotor moteur sans presser sur les volets des rotors conduits.

En augmentant les tours du moteur et avec lui le rotor moteur, augmente le volume de fluide de refoulement, avec l'augmentation des tours, le régulateur centrifuge relié au moteur actionne le levier de la cloison qui graduellement et proportionnellement se ferme. La pression et le volume du fluide augmente et presse sur les volets des rotors conduits en les faisant tourner. Plus les tours du moteur augmente, plus le régulateur centrifuge ferme le passage du fluide en cour circuit. L'effet embrayage est obtenu et soit une liaison progressive entre rotor moteurs et rotors conduits.

Les variations de vitesses sont obtenues au moyen de la variation de pression qui pousse le fluide en partie vers les rotors conduits et en partie tréfile en circuit. Avec moteur à tours optimaux le régulateur centrifuge a fermé la cloison, non complètement, mais en laissant une fissure qui peut être calibrée, et ceci pour obtenir même avec le maximum de tours un tréfilage partiel du fluide en cour circuit de la partie refoulante à la partie aspirante de le rotor moteur. La puissance ou force travail du fluide en pression qui tréfile n'est pas dispersée mais récupérée de la partie aspirante de le rotor moteur.

A puissance égale et à tours égaux de le rotor moteur on obtient des variations des rapports de vitesses dans les rotors conduits.

Avec moins de charge de travail, rotors conduits sous léger effort, égal à moins de pression du fluide, égal à moins de tréfilage du fluide en court circuit, égal à plus grand volume de fluide aux conduites qui augmentent la vitesse des tours. A plus grande charge de travail, avec les rotors conduits sous effort, la pression augmente, le tréfilage du fluide augmente, la pression est plus grande mais le volume de fluide aux rotors conduits est moindre, qui a puissance égale diminuent de tours. La vitesse et la charge de travail s'équilibrent. Si l'on doit ralentir ou arrêter le véhicule, on diminue les tours du moteur, le régulateur centrifuge ouvre la cloison, le fluide est en court circuit, les rotors conduits, ne reçoivent pas la pression de poussée et tournent à vide. Le rapport de transmission est ainsi réglé automatiquement sur la base des exigences de vitesse avec la disponibilité de puissance du moteur.

13

Les variations de vitesses sont obtenues tant en marche-avant qu'en renversement de marche. On à l'effect différentiel quand une des rotors conduits devant tourner moins que l'autre, (par exemple véhicule en virage) fait circuler une quantité moindre de fluide à l'avantage de l'autre rotor de façon à diminuer les tours de la première et augmenter ceux de l'autre et vice versa. Pendant le mouvement, en fermant tous les conduits de marche et renversement de marche on obtient freinage efficace sans secousses ou blocage.

14

Revendications.

1) Variateur hydraulique de vitesse avec fonctions d'embrayage, de modification des rapports de transmission avec marche et renversement de marche, de différentiel et de frein, caractérisé par le fait qu'il comprend une chambre étanche qui renferme une quantité de fluide de travail, chambre divisée en deux compartiments par un diaphragme avec deux passage linéaires et quatre croisés, par deux soupapes pivotantes qui ouvrent et ferment ces passages, par un organe de réglage du flux du fluide, par un arbre moteur placé dans le premier compartiment et deux arbres conduits placés dans le second compartiment, tous deux munis de volets à actionnement contraint par des cames desmodroniques, les arbres conduits pouvant être actionnés par le flux qui est poussé par le rotor moteur et les arbres conduits pouvant effectuer unre rotation égale ou bien invertie par rapport à l'arbre moteur et prendre des positions d'arrêt.

2) Variateur selon la revendication 1, caractérisé par le fait qu'il comprend un arbre moteur et deux arbres conduits disposés coaxialer nt et indépendamment entre

15

eux pour assurer un déphasage de rotation angulaire des axes respectifs durant la transmission de force.

3) Variateur selon la revendication 1 caractérisé par le fait que le diaphragme est constitué par une partie intermédiaire, par deux soupapes pivotantes capables d' d'adhérer aux sièges obtenus sur les côteés longitudi naux des parois mêmes, dans laquelle débouchent quatre canaux avec direction et inclinaison alternées.

4) Variateur selon la revendication 1 caractérisé par le fait que la chambre étanche présente en section trans versale une forme applatie et allongée dont les extrémités sont usinées avec une surface à demicylindre ayant un axe coaxial par rapport à celui de rotor moteur et conduite respectivement.

5) Variateur selon les revendications 1,2,3 caractéri sé par le fait que le corps de soupape pivotante dans sa partie centrale présente une ablation qui s'étend longitudinalement pour obtenir une section transversale conformée en secteur ou segment de cercle.

6) Variateur selon la revendication 5 caractérisé par le fait que les soupapes pivotantes sont réciproquement engagées avec l'interposition d'une pair de roues dentées.

16

7) Variateur selon les revendications 1,5,6, caractérisé par le fait que grâce à la conformation des secteurs des soupapes pivotantes, on réalise une première position pour la rotation des arbres conduits dans le même sens de rotation que l'arbre moteur, une deuxième position pour créer l'inversion des arbres conduits et une troisième position qui est intermédiaire par rapport à la première et à la deuxième, d'arrêt des arbres conduits.

8) Variateur selon la revendication 1, caractérisé par le fait qu'il comprend une cloison de réglage du flux du fluide en fonction des tours du moteur et de l'effort requis par le véhicule, organe qui est disposé entre la surface de la paroi intermédiaire et la ligne supérieure de la surface du rotor moteur.

9) Variateur selon la revendication 8, caractérisé par le fait que la cloison de réglage peut être actionnée par la pression du flux du fluide et entravée dans son ouverture par un levier à ressorts à calibrage réglabe à action progressive .

10) Variateur selon la revendication 8 et en alternative à la revendication 9, caractérisé par le fait

17

que la cloison de réglage est commandée par un levier
actionné par un régulateur centrifuge relié à l'arbre
moteur.

Fig. 2   A   Fig. 2 bis.

Fig. 1

Fig. 3

Sez. A-A

0064956

3/4

Fig. 6 bis.

23

4', 5', 6'

Fig. 6

8"  8  8'  8"

Fig. 5

9

8'  10  8'

8  8

Fig. 5 bis

9

21  19  17  19'

18

Fig. 4

Fig. 4 bis.

Fig. 9

Fig. 12

Fig. 8

Fig. 11

Fig. 7

Fig. 10